# EUROPÄISCHE PATENTANMELDUNG

(11) **EP 3 786 592 A1**
(43) Veröffentlichungstag der Anmeldung: **03.03.2021**
(21) Anmeldenummer: 20000274.9
(22) Anmeldetag: 05.08.2020
(51) Int. Cl.: G01F 1/00, F02M 26/19, F02M 35/10

(54) **SAUGMOTOR MIT REFLEKTOR ANSAUGSYSTEM**

(30) Priorität: 30.08.2019 DE 102019006128
(71) Anmelder: DEUTZ Aktiengesellschaft, 51149 Köln (DE)
(72) Erfinder: Boemer, Andreas, 51143 Köln (DE); Kipke, Peter, 57462 Olpe (DE); Klassen, Sergej, 53842 Troisdorf (DE); Klubschefsky, Jens, 51061 Köln (DE); Sieverding, Hartmut, 51145 Köln (DE)

(57) **Zusammenfassung**

2. Die Erfindung betrifft eine Brennkraftmaschine, insbesondere Dieselbrennkraftmaschine, umfassend wenigstens einen Ansaugtrakt mit wenigstens einem Strömungsgleichrichter.

## Beschreibung

Aus der EP 458998 A1 ist es bei einer Brennkraftmaschine bekannt, einen Strömungswandler für einen Luftmassenmesser im Ansaugkanal einzusetzen. Der Strömungswandler besteht aus einem Strömungsgleichrichter und einem Gitter, durch das die Strömung in Mikrowirbel gewandelt wird, und ist stromaufwärts von dem Luftmassenmesser in dem Ansaugkanal angeordnet. Die Wirkungsweise des bekannten Strömungswandlers beruht auf einer richtungsgebenden Funktion des Strömungsgleichrichters sowie der Auflösung der Strömung in ein Feld von Mikrowirbel durch das nachgeschaltete Metallgitter. Beide Elemente erzeugen darüber hinaus einen Druckabfall, wodurch eine Homogenisierung der Strömungsgeschwindigkeiten über den Rohrquerschnitt erzielt wird. Gleichzeitig ist der Druckabfall in dem Ansaugrohr jedoch von Nachteil, da hierdurch weniger Luft angesaugt wird und letztlich eine Leistungsminderung der Brennkraftmaschine erfolgt. Ferner ist der Einbau umständlich und erfordert einen gut zugänglichen Ansaugtrakt.

Die EP 342612 A1 offenbart einen Luftmassensensor mit einem ersten Element, welches die Strömungsluft beheizt, und einem zweiten Element, welches aus wabenförmigen Zellen besteht und die an die Luft abgegebene Wärme misst. Das zweite Element erfüllt also sowohl die Funktion eines Strömungsgleichrichters, als auch die eines Luftmassensensors.

Aus der DE 3009382 A1 ist eine Vorrichtung zur Messung der Strömungsgeschwindigkeiten von Gasen und Flüssigkeiten bekannt, bei der ein Luftmassensensor in einer Aussparung eines als Strömungsgleichrichter dienenden Wabenkörpers angeordnet ist.

Die DE 10009153 A1 offenbart eine Vorrichtung zum Messen der Luftmasse in einem Ansaugkanal, bei der ein Strömungsgleichrichter stromabwärts von einem Luftmassensensor angeordnet ist.

Der Erfindung liegt die Aufgabe zugrunde, eine Brennkraftmaschine zu schaffen, die eine exakte Regelung der Abgasrückführung (AGR) zur Einhaltung der Abgasemissionen bei gleichbleibendem Verlauf von Luftmassenstrom und AGR-Massenstrom für jede Ansaugverrohrung ermöglicht.

Erfindungsgemäß wird die Aufgabe durch eine Brennkraftmaschine mit den Merkmalen aus Anspruch 1 gelöst. Weitere Vorteile ergeben sich aus den Unteransprüchen.

Die erfindungsgemäße Brennkraftmaschine umfasst einen Luftmassensensor und einen Strömungsgleichrichter. Der Luftmassensensor steht in seinem eingebauten Zustand dem Ansaugkanal vor und ermittelt eine vorbeiströmende Luftmasse. Hierbei kann es sich bevorzugt um einen Einsteck-Kanal-Luftmassensensor handeln. Der Strömungsgleichrichter für die strömende Luft ist in seinem eingebauten Zustand in dem Ansaugkanal angeordnet und besitzt eine oder mehrere Leitflächen für die vorbeiströmende Luft, die zu einer Gleichrichtung der durch den Strömungsgleichrichter tretenden Strömung führen. Der Strömungsgleichrichter ist in der Hauptströmungsrichtung der zu der Brennkraftmaschine strömenden Luftmasse im Wesentlichen auf gleicher Höhe mit einer Einlassöffnung des Luftmassensensors angeordnet. Der vorgeschlagenen Position des Strömungsgleichrichters liegt die Erkenntnis zugrunde, dass eine betragsmäßige Homogenisierung der Strömungsgeschwindigkeit über den Rohrquerschnitt durch den von den Elementen hervorgerufenen Druckabfall erreicht wird. Bei der betragsmäßig homogenisierten Strömung ist das Geschwindigkeitsprofil geglättet, auch sind Unregelmäßigkeiten in dem Strömungsprofil ausgeglichen. Die erfindungsgemäße Anordnung schafft darüber hinaus eine erhebliche Platzersparnis, so dass kein zusätzlicher Platz in dem Ansaugtrakt der Brennkraftmaschine für den Einbau vorgesehen werden muss. In einer bevorzugten Ausgestaltung besitzt der Strömungsgleichrichter einen wabenförmigen Aufbau von Leitflächen, die eine Vielzahl von in Hauptströmungsrichtung ausgerichteten Durchgangskanälen besitzen. Die durch den Strömungsgleichrichter strömende Luft wird parallel durch die Durchgangskanäle geleitet und in eine nach Betrag und Richtung homogenisierte Strömung umgewandelt. Im Ergebnis führt dies dazu, dass auch stromaufwärts von dem Strömungsgleichrichter die Luftströmung homogenisiert wird. An der Einlassöffnung für den Luftmassensensor liegen vorbestimmte Strömungsverhältnisse vor, die eine zuverlässige Messung der vorbeiströmenden Luftmasse gestatten.

In einer bevorzugten Weiterbildung besitzt der Strömungsgleichrichter eine Ausnehmung, die dem in dem Ansaugkanal vorstehenden Abschnitt des Luftmassensensors entspricht. Sind Strömungsgleichrichter und Luftmassensensor gemeinsam in dem Ansaugkanal angeordnet, so umschließt der Strömungsgleichrichter den Luftmassensensor ganz oder teilweise in seinem in den Ansaugkanal hineinragenden Abschnitt.

Bevorzugt bedeckt der Strömungsgleichrichter den verbleibenden Querschnitt des Ansaugkanals vollständig. Bei dieser Ausgestaltung ist dann der gesamte Ansaugkanal in seinem Querschnitt durch den Luftmassensensor bzw. den Gleichrichter bedeckt.

Alternativ zu der vollständigen Bedeckung des Ansaugkanals ist es auch möglich, dass der Strömungsgleichrichter lediglich einen Bereich des Querschnitts um den Luftmassensensor bedeckt. Dieser Bereich kann abhängig von Strömungshindernissen stromaufwärts in dem Ansaugkanal angeordnet sein.

In einer anderen, ebenfalls vorteilhaften, Ausgestaltung besitzt der Strömungsgleichrichter eine oder mehrere Strömungselemente, die an ihrer Flachseite umströmt werden. Das Geschwindigkeitsprofil der Luftströmung in dem Ansaugkanal hängt von der stromaufwärts liegenden Gestaltung und etwaigen Strömungshindernissen ab, um hier gezielt eine Homogenisierung der Strömung herbeizuführen.

In einer für den Einbau in den beengten räumlichen Verhältnissen im Motorraum besonders vorteilhaften Ausgestaltung sind der Luftmassensensor und der Strömungsgleichrichter miteinander verbunden und werden gemeinsam über einen Schlitz in den Ansaugkanal eingesteckt. Hierdurch wird der Einbau des Luftmassensensors deutlich vereinfacht und es ist nur ein Arbeitsschritt erforderlich.

Ausführungsbeispiele der erfindungsgemäßen Messvorrichtung werden nachfolgend anhand der Zeichnung näher erläutert. Es zeigen:
- Fig. 1: einen schematischen Motoraufbau mit Kundenverrohrung und Venturi,
- Fig. 2: den Reflektor aus Figur 1,
- Fig. 3: den Druckverlauf in Abhängigkeit der Motordrehzahl am Motoreintritt,
- Fig. 4: den mittleren Luftmassenstrom in Abhängigkeit der Motordrehzahl,
- Fig. 5: die Venturidruckdifferenz in Abhängigkeit der Motordrehzahl,
- Fig. 6: den Vergleich des Druckverlusts zwischen einer Drosselklappe und dem Reflektor aus Fig. 2,
- Fig. 7: die Druckverluste von unterschiedlichen Reflektorleitblechanordnungen,
- Fig. 8: die Einleitung der Kurbelgehäuseentlüftung im Unterdruckbereich hinter der zweiten Trennwand bzw. dem zweiten Reflektorleitblech.

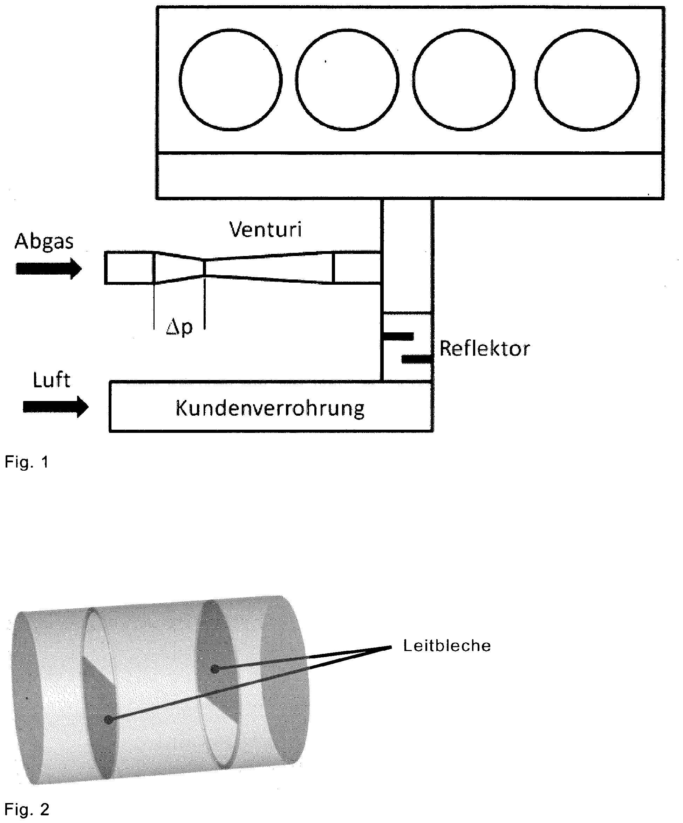

Fig. 1 zeigt eine schematische Darstellung des Motoraufbaus mit einer Kundenverrohrung und einem Venturirohr. Es werden zwei Leitbleche in einem bestimmten Abstand hintereinander am Eintritt zum Motor und vor der Einleitung der Abgasrückführung (AGR) in die Frischluft eingefügt. Die beiden Reflektorleitbleche nehmen etwas mehr als die halbe Rohrquerschnittsfläche ein und sind radial um 180° verdreht zueinander angeordnet. Dadurch wird die von den Einlassventilen kommende Druckwelle schon am Motoreintritt reflektiert und ist somit nahezu unabhängig von der Ansaugverrohrung des jeweiligen Kunden. Es kommt zu einer Vergleichmäßigung des Luftmassenstroms sowie des Drucksignals am Venturirohr.

In Fig. 2 wird der Reflektor aus Fig. 1 dargestellt, wobei die zwei Leitbleche in einem bestimmten Abstand hintereinander am Eintritt zum Motor und vor der Einleitung der Abgasrückführung (AGR) via Venturirohr in die Frischluftleitung eingefügt angeordnet sind. Die beiden Reflektorleitbleche nehmen etwas mehr als die halbe Rohrquerschnittsfläche ein und sind radial um 180° verdreht zueinander angeordnet. Dadurch wird die von den Einlassventilen kommende Druckwelle schon am Motoreintritt reflektiert und ist somit nahezu unabhängig von der Ansaugverrohrung des jeweiligen Kunden. Es kommt zu einer Vergleichmäßigung des Luftmassenstroms sowie des Drucksignals am Venturirohr.

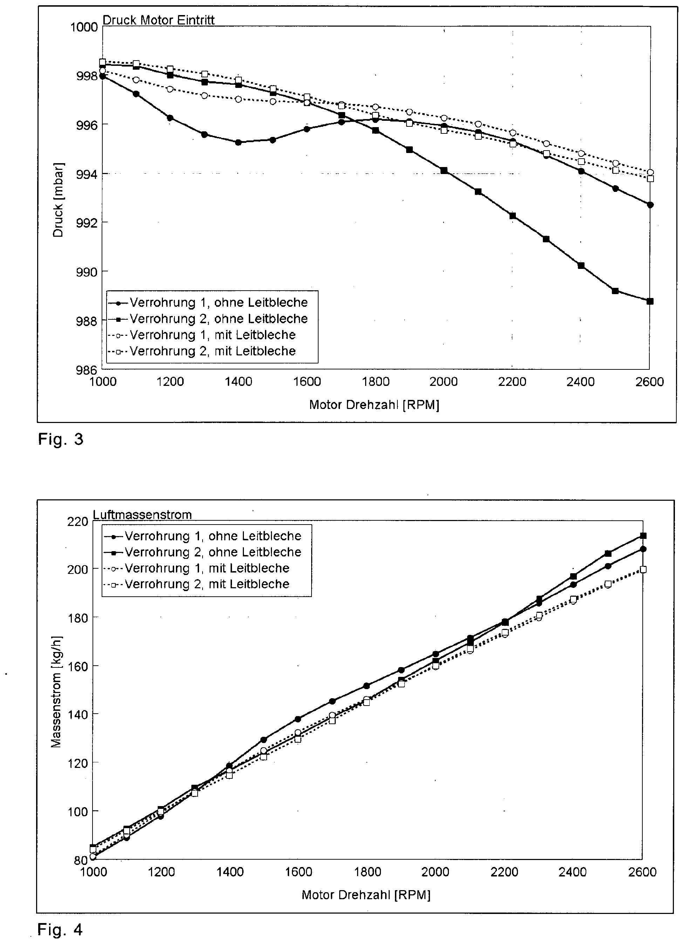

Fig. 3 zeigt den Druckverlauf in Abhängigkeit der Motordrehzahl am Motoreintritt.

In Fig. 4 stellt den mittleren Luftmassenstrom in Abhängigkeit der Motordrehzahl dar.

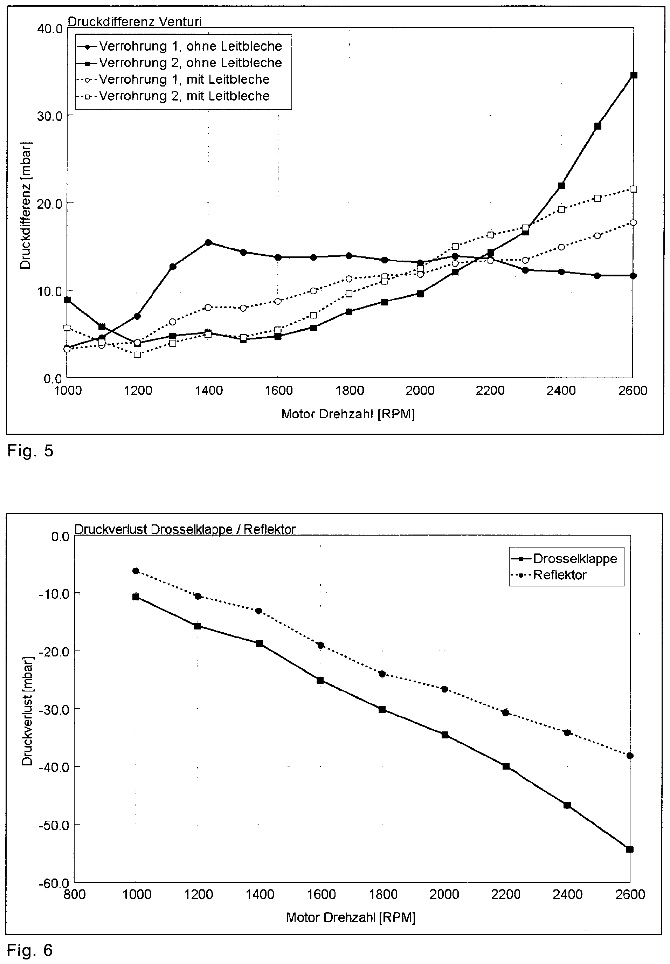

Fig. 5 offenbart die Venturidruckdifferenz in Abhängigkeit der Motordrehzahl.

In Fig. 6 wird der Vergleich des Druckverlusts zwischen einer Drosselklappe und dem Reflektor aus Fig. 2 gezeigt.

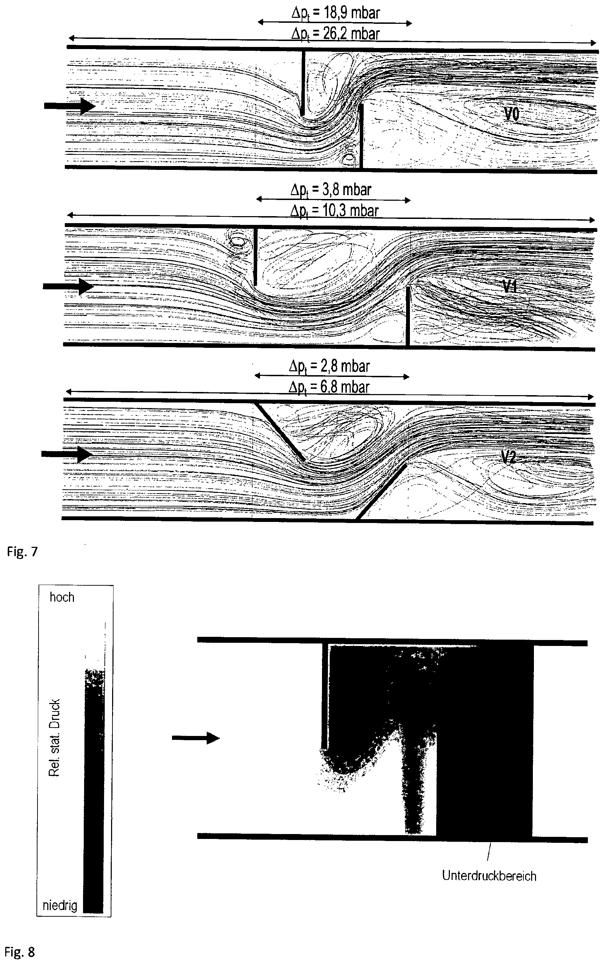

Fig. 7 stellt die Druckverluste von unterschiedlichen Reflektorleitblechanordnungen dar, wobei das obere Beispiel einen engeren Abstand der Reflektorleitbleche zeigt. Im mittleren Ausführungsbeispiel sind die Reflektorleitbleche weiter auseinander angeordnet. Das untere Beispiel zeigt schräg angeordnete Reflektorleitbleche.

Fig. 8 zeigt die Einleitung der Kurbelgehäuseentlüftung im Unterdruckbereich hinter der zweiten Trennwand bzw. dem zweiten Reflektorleitblech des Reflektors aus Fig. 2.

Die Geometrie des Ansaugsystems zwischen Luftfilter und Motor kann durch den Kunden frei gewählt werden, wie dies in Fig. 1 gezeigt wird. Lediglich der maximal zulässige Druckverlust am Motoreintritt ist reglementiert.

Insbesondere bei Saugmotoren mit vier oder weniger Zylindern bringen unterschiedliche Kundenverrohrungen, trotz gleichen Relativdrucks am Motoreintritt, unerwünschte Veränderungen des Druckverlaufs pro Arbeitsspiel mit sich und verursachen eine Veränderung des mittleren Luftmassenstroms.

Dieses Verhalten wird dadurch hervorgerufen, dass die Druckwelle, von den Einlassventilen kommend und in Richtung Ansaugsystem bewegend, je nach Kundenverrohrung eine kürzere oder längere Laufzeit bis zu ihrer Reflexion zurück in Richtung Einlassventile benötigt. Ähnlich wie bei der Schwingrohraufladung kann die reflektierte Druckwelle zu einer besseren Füllung und damit einem höheren Luftmassenstrom führen oder im ungünstigen Fall auch das Gegenteil bewirken. Reflexionsstellen können hierbei neben der Rohrlänge auch Querschnittssprünge oder Rohreinbauten sein.

Bei Verbrennungsmotoren mit Abgasrückführung (AGR) wird der rückgeführte Abgasmassenstrom normalerweise aus dem Differenzdrucksignal Δp eines Venturirohres berechnet. Eine Veränderung des Druckverlaufs im Saugrohr wirkt sich auch auf das Drucksignal im Venturirohr und somit auf den berechneten AGR-Massenstrom aus.

Für eine exakte Regelung der AGR zur Einhaltung der Abgasemissionen ist jedoch ein möglichst gleichbleibender Verlauf von Luftmassenstrom und AGR-Massenstrom für jede Ansaugverrohrung erforderlich.

Es werden deshalb zwei Leitbleche in einem bestimmten Abstand hintereinander am Eintritt zum Motor und vor Einleitung der AGR in die Frischluft eingefügt, wie dies in Fig. 1 dargestellt wird. Die beiden Leitbleche nehmen etwas mehr als die halbe Rohrquerschnittsfläche ein und sind radial um 180° verdreht zueinander angeordnet, was in Fig. 2 dargestellt wird, dadurch wird die von den Einlassventilen kommende Druckwelle schon am Motoreintritt reflektiert und ist somit nahezu unabhängig von der Ansaugverrohrung, wie dies aus Fig. 3 zu entnehmen ist. Es kommt zu einer Vergleichmäßigung des Luftmassenstroms sowie des Drucksignals am Venturirohr, was in den Fig. 4 und 5 offenbart wird. Weiterer Vorteil dieser Vorrichtung ist der geringere Druckverlust gegenüber einer herkömmlichen Drosselklappe bei gleichen Randbedingungen, wie dies in Fig. 6 dargestellt wird. Die Geometrie der Leitbleche sollte so gewählt werden, dass sie die Druckwellen so weit wie nötig dämpft, aber den stationären Druckverlust so niedrig wie möglich hält. Fig. 7 zeigt Ergebnisse von CFD-Simulationen einiger möglicher Varianten. Die Einleitung der Kurbelgehäuseentlüftung erfolgt im Unterdruckbereich hinter der zweiten Trennwand, was in Fig. 8 dargestellt wird.

## Patentansprüche

1. Brennkraftmaschine, insbesondere Dieselbrennkraftmaschine, umfassend wenigstens einen Ansaugtrakt mit wenigstens einem Strömungsgleichrichter.

2. Brennkraftmaschine nach Anspruch 1,
**dadurch gekennzeichnet, dass** sie wenigstens eine Abgasrückführvorrichtung aufweist.

3. Brennkraftmaschine nach Anspruch 2,
**dadurch gekennzeichnet, dass** die Abgasrückführungsvorrichtung wenigstens ein Venturirohr aufweist und wenigstens einen Drucksensor und/oder einen Luftmassensensor.

4. Brennkraftmaschine nach einem oder mehreren der vorgenannten Ansprüche,
**dadurch gekennzeichnet, dass** der Strömungsgleichrichter in Strömungsrichtung der Frischluft vor der Abgasrückführung angeordnet ist.

5. Brennkraftmaschine nach einem oder mehreren der vorgenannten Ansprüche,
**dadurch gekennzeichnet, dass** der Strömungsgleichrichter als Reflektor ausgebildet ist.

6. Brennkraftmaschine nach einem oder mehreren der vorgenannten Ansprüche,
**dadurch gekennzeichnet, dass** der Strömungsgleichrichter wenigstens zwei Leitbleche aufweist.

7. Brennkraftmaschine nach einem oder mehreren der vorgenannten Ansprüche,
**dadurch gekennzeichnet, dass** der Strömungsgleichrichter wenigstens zwei Leitbleche aufweist, die labyrinthartig angeordnet sind.

8. Brennkraftmaschine nach einem oder mehreren der vorgenannten Ansprüche,
**dadurch gekennzeichnet, dass** die wenigstens zwei Leitbleche im Wesentlichen parallel zueinander angeordnet sind.

9. Brennkraftmaschine nach einem oder mehreren der vorgenannten Ansprüche,
**dadurch gekennzeichnet, dass** die wenigstens zwei Leitbleche im Wesentlichen senkrecht zueinander angeordnet sind.

10. Verfahren zum Betreiben einer Brennkraftmaschine,
**dadurch gekennzeichnet, dass** eine Brennkraftmaschine nach einem oder mehreren der vorgenannten Ansprüche zum Einsatz kommt.
